# EUROPEAN PATENT SPECIFICATION

(11) **EP 1 941 701 B1**
(45) Date of publication and mention of the grant of the patent: **22.06.2011**
(21) Application number: 06787972.6
(22) Date of filing: 20.07.2006
(51) Int. Cl.: H04L 29/08

(54) **TELEPHONY AND WEB SERVICES COORDINATION**
KOORDINATION VON TELEFONIE- UND WEB-DIENSTEN
COORDINATION DE SERVICES DU WEB ET DE TELEPHONIE

(30) Priority: 28.10.2005 US 262097
(43) Date of publication of application: 09.07.2008
(73) Proprietor: HEWLETT-PACKARD DEVELOPMENT COMPANY, L.P., Houston, TX 77070 (US)
(72) Inventor: BURKE, Paul, Michael, Nashua, New Hampshire 03062-2698 (US); EVANS, Gregory, R. c/o Hewlett Packard Company, Richardson, Texas 75080-1400 (US); MCGLASHAN, Scott, S-169 85 Stockholm (SE); ISAACSON, David c/o Hewlett Packard Company, Lester, Pennsylvania 19113 (US); SCHILLINGER, Sandra, Lynn, Bridgewater, New Jersey 08807 (US); WINSOR, Gerald, W., Nashua, New Hampshire 03062 (US)
(74) Representative: Harrison Goddard Foote
(86) International application number: PCT/US2006/028188
(87) International publication number: WO 2007/050158

(56) References cited:
- EP-A2- 1 199 872
- WO-A-2005/009018
- US-A1- 2003 145 054
- SIP WG ROSENBERG/MATAGA/SCHULZRINNE DYNAMICSOFT/COLUMBIA U: "An Application Server Component Architecture for SIP" IETF STANDARD-WORKING-DRAFT, INTERNET ENGINEERING TASK FORCE, IETF, CH, no. 1, 2 March 2001 (2001-03-02), XP015034691 ISSN: 0000-0004
- ROSENBERG J ET AL: "AN APPLICATION SERVER ARCHITECTURE FOR COMMUNICATIONS SERVICES" WHITE PAPER DYNAMICSOFT, 2000, pages A,1-12, XP001012346

## Description

### Introduction

Mobile handheld multifunction devices capable of both voice and data functions have proliferated in recent years. Certain mobile devices are capable of different network type connections. Examples of these different network types include the public switched telephone network (PSTN), mobile or wireless voice networks; e.g., public local mobile networks (PLMNs), IP networks, global system for mobile general packet radio service (GSM GPRS) networks, and public wireless local area networks (PwLANs), etc. GPRS is an enhancement to the GSM mobile communications system that supports data packets. GPRS enables continuous flows of IP data packets over the system for such applications as Web browsing and file transfer.

An IP network (e.g., the Internet) is composed of nodes of computers, servers, routers, and communications links, etc. The IP network employs packet-switching technology that decomposes data (e.g., voice, web pages, e-mail messages, etc.) into IP packets. Each packet is then transmitted over an IP network to a destination identified by an IP address and reassembled at the destination. An IP transmission is completed without pre-allocating resources from point to point.

Service and Media platforms, as used in communications networks including mobile networks, ISPs, corporate webservers, advertising agencies, etc., among others, are computing devices that include processor and memory capabilities, e.g., servers and databases. Media platforms can include hardware components, such as trunk lines, switches, routers, etc. Service platforms include servers having computer executable instructions operable thereon for the delivery of web services. Service and media platforms can include software, application modules, firmware, and other computer executable instructions operable thereon to perform various tasks and functions. Modern media platforms are becoming more and more functional, or intelligent, in terms of the services they can provide in cooperation with the software tools that are provided thereon. For example, today the PSTN (SS7 network) includes service control points (SCPs) and other intelligent peripherals which can execute instructions to provide 800 number services, voice mail, and interactive voice recognition (IVR), etc. Communications networks use instant messaging (IM), location services, audio and video conferencing capabilities, etc., in addition to regular phone services.

In a communication services delivery environment, there are different top to bottom, or "stove-pipe", type software applications and connection channels. These individual applications and channels contain their own session context. For example, applications are offered by service providers that run in their own context without the ability to share data between them. Multiple application developers can work together to integrate their applications to offer a superset of application features. However, this process requires the application developers to be involved and may not be economically feasible for a large number of services.

A web services environment has defined methods for sharing data between applications. Web services include web-based applications that dynamically interact with other web applications using open standards that include extensible markup language (XML), universal description, discovery and integration (UDDI), and simple object access protocol (SOAP). Such applications run behind the scenes, one program talking to another, server to server. Telephony systems are typically not defined in web services terms. Thus, coordinating events and context between these two domains has been an issue. While proprietary methods to coordinate events and context between web applications and telephony have been used they are not implemented in a ubiquitous fashion.

EP 1 199 872 A1 disclose a method of extending a communication exchange between first and second parties in telephone contact to include communication over a data network via respective endpoint systems. The method uses a network service system that can set up a communication session and join endpoint systems to the session to enable them to communicate with each other over the network. The method involves the second party using its endpoint system to request and obtain from the service system an identifier which the second party then passes over the telephone to the first party. Next, the first party uses its end-point system to connect to the network and send the identifier to the service system. The service system then uses the identifier to join the endpoint system of the first party into a communication session with the endpoint system of the second party.

US 2003/0145054 A1 discloses a conferencing system that can access advanced conferencing features while following essentially the same call flow as conventional conferencing systems. The conferencing system includes a computer network, and at least one conferencing application server, at least one media server, and at least one user agent connected to the network. The conferencing application server establishes and manages multimedia conferences by engaging in Session Initiation Protocol (SIP) signaling with the user agents and the media server. The conferencing system employs an enhanced SIP signaling technique including a conferencing Application Programming Interface (API) implemented by incorporating Extensible, Mark-up Language (XML) messages in the bodies of respective SIP request/response messages.

WO 2005/009018 A1 discloses a communication system adapted to establish a communication between at least two end-points, comprising: a control server for receiving a request including an identifier of a calling number of one end-point and an identifier of an action, and adapted to transmit said request in XML format in dependence upon said action, a switching control server for receiving the request in XML format; an IP router operating under the control of SIP messages from the switching control server, the IP router being controlled for establishing a first communication link to the calling number of the one end-point; wherein the switching controller further controls the IP router to connect the established communication link to the other end-point.

It is the object of the present invention to provide a method allowing coordination of events and context between a telephony session and a web application service.

This object is achieved by a method according to claim 1.

### Brief Description of the Drawings

Figure 1 is an embodiment of a service delivery platform (SDP) having connectivity to different network types.
Figure 2 illustrates an embodiment for messaging interaction between a wireless device, including a number of initiator services, and a SDP.
Figure 3 illustrates an SDP application server embodiments for coordinating telephony and web services using ccXML on the SDP.
Figure 4 illustrates an embodiment of the methodology for extending the functionality of ccXML's role in the SDP to processing web service events and input/output.
Figure 5 illustrates an embodiment employing, session context based on a session ID to coordinate telephony and web services.

### Detailed Description

Embodiments of the present invention provide for systems and methods based on Web Services standards that allow application to be chained, i.e., linked, together using the context of one application as input to another application. One method embodiment includes defining a call control XML (ccXML) element associated with accessing a web service application. The method includes extracting a session identification (ID) from a ccXML action in a telephony session. The session ID is used to store and retrieve session context in a context repository. A web service application is invoked using the session ID to coordinate events and context between the telephony session and the web service application.

### Service Delivery Platform (SDP) Embodiment

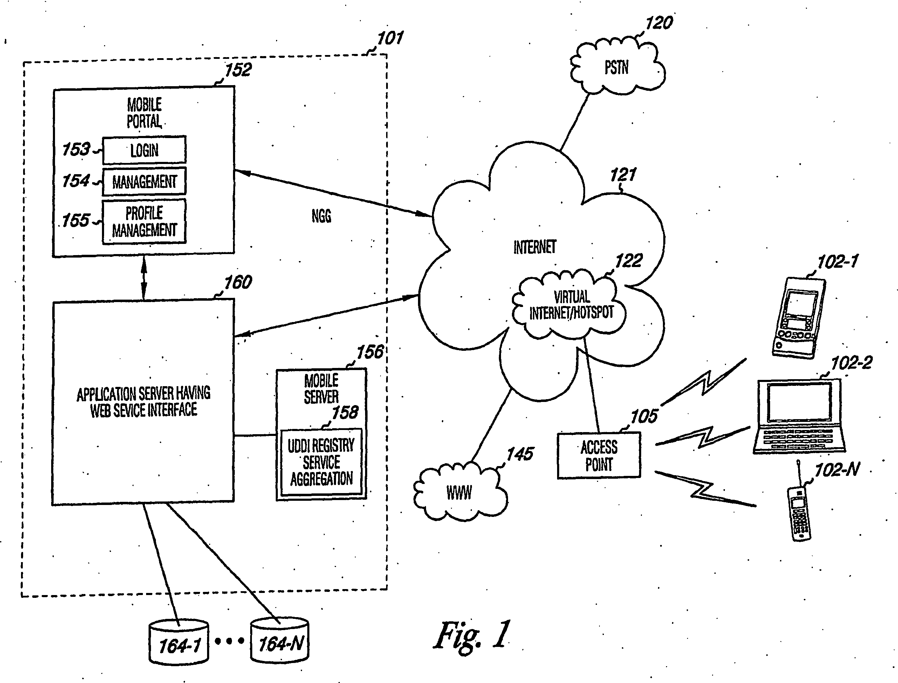

Figure 1 is an embodiment of a service delivery platform (SDP) 101 having connectivity to different network types, e.g., the PSTN 120, the Internet 121, wireless networks 105, etc. Figure 1 illustrates a number of wireless, e.g., mobile and portable, devices, 102-1, 102-2, ..., 102-N. These wireless devices 102-1, 102-2, ..., 102-N can include a wireless network interface such as a wireless transceiver, wireless network interface card, etc. These wireless devices, 102-1, 102-2, ..., 102-N can include wireless enabled personal digital assistants (PDAs), communication handsets such as multifunction phones, Blackberry devices, laptop computers, among others to name a few. Each of these wireless devices 102-1, 102-2, .., 102-N may have different features and function capabilities dependent upon a particular device type and applications provided thereon. That is, some devices may include features such as color displays and include application functionality that provides for instant messaging (IM), conferencing, streaming video, push to talk (PTT) capabilities, etc. Embodiments of the invention, however, are not limited to these examples. The wireless devices102-1, 102-2, ..., 102-N can include a Java 2 Platform Micro Edition (J2ME) OS which is a version of the Java 2 OS for cellphones, PDAs and consumer appliances. Such wireless devices 102-1, 102-2, ..., 102-N can connect to access points 105 in a wireless network according to various RF protocols, e.g., global system for mobile general packet radio service (GSM GPRS), evolution data only (EV-DO), Bluetooth, Wi-Fi, etc.

An access point 105, conducting RF communication with such various devices 102-1, 102-2, ..., 102-N, can include a base station in a mobile network and/or a wireless router/transceiver in a wireless LAN and can be a wireless "hot-spot" such as a Bluetooth or Wi-Fi access point in a public location. Embodiments of the invention, however, are not limited to these examples. Access points 105 can provide a wireless to wireline connection for access to the Internet 121. A virtual ISP 122 can exist within an Internet connection 121 which can facilitate Internet connection with the wireless access point 105 and handle roaming access, billing, and the like. The Internet 121 can have various connections, e.g., through gateways using TCP/IP, to the PSTN 120, to the world wide web (WWW) 145, etc. The SDP platform 101 has connections to the Internet 121, the PSTN 120, and the WWW 145 and can include a gateway 150 for handling voice, data, and video traffic, etc. In some embodiments the gateway 150 can provide authentication, access, and billing for connecting to the SDP 101.

The gateway 150 can interface with a mobile portal 152 which can include a server that deploys portal services, such as login 153, management 154, and profile management 155, to a public web site or internal intranet.

Figure 1 also illustrates a mobile server 156 accessible by the mobile portal 152. The mobile server 156 can include access to a universal description, discovery and integration (UDDI) database 158. The mobile server 156 is accessible by the mobile portal 152 via an application server 160. According to embodiments of the disclosure the application server 160 provides a web services interface.

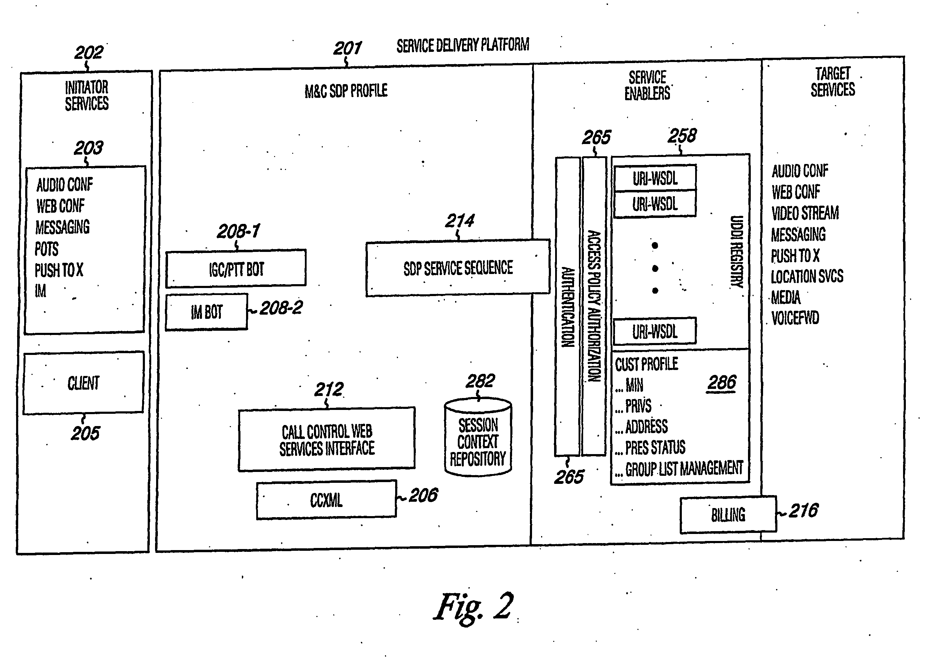

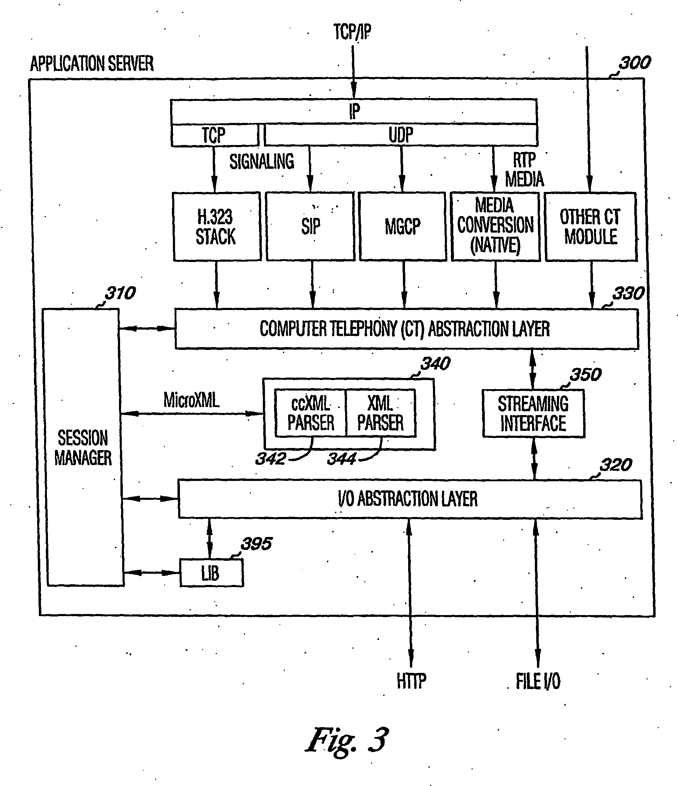

As described in more detail in connection with Figure 2, program instructions (e.g., computer executable instructions) are provided to the application server 160, having the web services interface, which are executable to retrieve a session context based on a session ID in association with a first application invoked by a wireless device 102-1, 102-2, ..., 102-N in a telephony session. The program instructions execute to store session context for the first application based on the session ID in a context repository (shown as 382 in Figure 3). To illustrate, a telephony application such as a push to talk (PTT) application can be provided to a wireless device 102-1, 102-2, ..., 102-N such as an IPAQ, available from Hewlett Packard, as a network operator service through a network provider such as Verizon, Sprint-Nextel, Vodafone, NTT DoComo, KDDI, T-Mobile, Cingular, etc. This application on the wireless device 102-1, 102-2, ..., 102-N can invoke a PTT telephony session through the network provider.

### SDP Architecture and Service Flow Embodiment

Figure 2 illustrates an embodiment for messaging interaction between a wireless device 202, including a number of initiator services 203, and a service delivery platform (SDP) 201. In the architecture and service flow embodiment of Figure 2, the SDP 201 is illustrated, for ease of discussion, as being partitioned into three areas of functionality or operational groups, e.g., a messaging and collaboration (M&C) profile portion, a service enabler portion, and a target services portion. This partitioning illustration will be discussed and described in more detail in the discussion which follows.

An application on the wireless device 202 can invoke a PTT telephony session through the network provider as described in connection with Figure 1. The wireless device can include a wireless device, e.g., 102-1, 102-2, ...; 102-N, as shown in Figure 1. The embodiment of Figure 2 illustrates a number of initiator services 203 that can interface with a SDP application 205, e.g., a SDP application provided to the wireless device 202. In Figure 2, the initiator services are illustrated as including an audio conference, a web conference, messaging, plain old telephone service (POTS), push to X (where, "X" is some other added application value such as photo services, location services, etc.), instant messaging (IM), etc. As described in a copending, commonly assigned patent application, entitled "Service Chaining", application no. filed on even date herewith, these example initiator services, e.g., instant messaging (IM), conferencing, streaming video, push to talk (PTT) capabilities, etc., also represent examples of operator services which may be available through a particular network provider.

According to various embodiments, ccXML applications 206 are used to expose one or more operator services as web services through a call control web services interface 212 illustrated within the M&C profile portion of the SDP 201. As described in the copending patent application "Service Chaining", an SDP 201 can interact with a development tool to create the SDP application 205. One example of such a development tool includes a Macromedia Flash MX as available from Macromedia, Inc. Using such a development tool, an application developer, based on access rights can build, i.e., write, applications that embed the web services that are exposed in the SDP 201. The developer also embeds in the application the ability for services that are implemented to be associated with a session ID created by a ccXML application 206 handling a telephony session. In Figure 2, the SDP application 205 can then be delivered to and stored upon a wireless device 202.

Execution of various initiator services 203 on the mobile device 202 can connect to and message particular agent applications, e.g., 208-1 and 208-2, illustrated within the M&C profile portion of the SDP 201. The particular agent applications act as a user endpoint in a telephony session, e.g., a called number in a cell phone call, a GPRS address in a push to talk (PTT) session, or an address in an instant messaging (IM) session. In the embodiment of Figure 2, two example agent applications are illustrated, including a PTT agent 208-1 and a IM agent 208-2. Embodiments, however, are not limited to the number or type of such application agents provided to the SDP201 in association with various SDP applications 205 provided to mobile devices 202. One example of an agent application, e.g., 208-1 and 208-2, is described in the copending patent application "Service Chaining". In this example the application software agents, 208-1 and 208-2, are BOTS. The BOTS are programs which can act as activators, e.g., gateways, to initiate server side applications on the SDP 201 e.g., web services applications. As the reader will appreciate, a gateway can perform protocol conversion between different types of networks or applications and acts as a go-between two or more networks that use the same protocols, e.g., function as an entry/exit point to the network.

As described in the copending patent application "Service Chaining", through a service controller of an application server in SDP 201, the BOTS can initiate a web service such as GLMS, location services, conferencing, etc, and can retrieve and store session context in a context repository 282 in association with a session ID. As described in the above applications, a BOT can provide a method to allow a standard client endpoint such as an 1M endpoint to participate in a service chain without involving modification of the endpoint client, e.g., the BOT acts as a gateway from the client to the service chaining architecture.

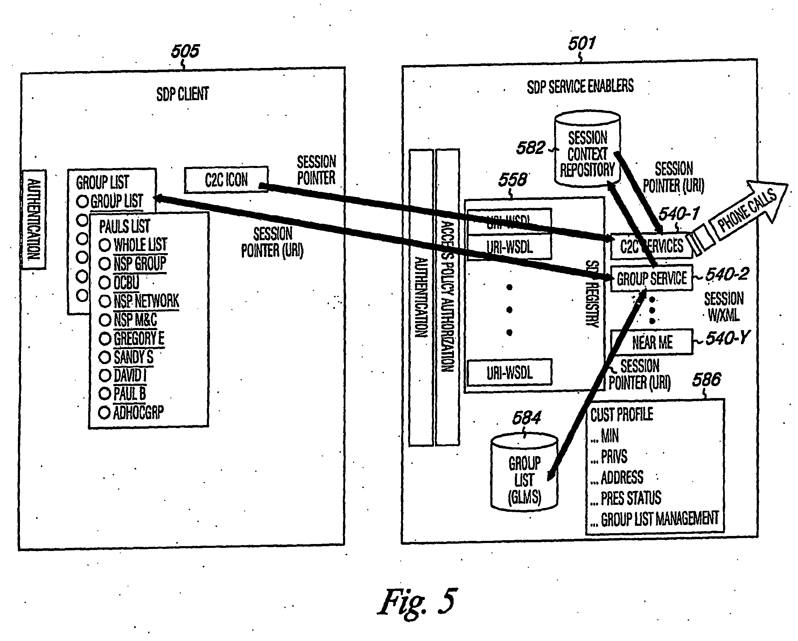

In Figure 2, program instructions provided to the SDP 201 can execute according to a particular service sequence 214 to provide authentication and access 265 to a UDDI registry 258 in the SDP. The service sequence 214 is illustrated interfacing the M&C profile portion to the service enablers portion. Once example of a particular sequence is described in detail in the above mentioned, copending patent application "Service Chaining". For example, the service sequence 214 can be in the form of a UDDI application program interface (API) able to make UDDI API calls to the UDDI registry 258. The UDDI registry 258 is a database that provides location and access information to web services through uniform resource identifiers (URis) associated with web services description language (WSDL). WSDL is an XML-based language for defining web services. The WSDL describes the protocols and formats used by the web service. WSDL descriptions can be housed in a UDDI registry 258 in association with URIs as illustrated in Figure 2. The WSDLs can provide pointers to various web services applications (as described in more detail in connection with Figure 5). In the embodiment of Figure 2, example web services are illustrated within the target services portion of the SDP 201. As illustrated in the embodiment, the example target web services can include audio conference services, web conference services, video streaming, messaging, push to X, location services, media, voice forwarding, etc. Embodiments are not limited to these examples.

The authentication and access 265 to the UDDI registry 258 can be provided in the form of program instructions that execute to perform the respective functions of authentication, access policy, and authorization. For example, these program instructions can execute to access an authentication profile 286, e.g., a customer profile, that can include such information as a mobile user's mobile identification number (MIN), a mobile user's private information, address information, present status, etc.

As noted above, various web services can be made available through the program instructions on the SDP 201 by exposing these services on the SDP and using a development tool to create programs that embed the web services into mobile device program. The program developer embeds in the mobile application the ability for services that are implemented to be associated with a session ID. As will be described in more detail in connection with Figures 3-5 the location and access information provided by the UDDI registry are then used to access particular web services illustrated within the target services portion of the SDP 201.

### SDP Application Server Embodiment

Figure 3 illustrates an SDP application server 300 embodiment for coordinating telephony and web services using ccXML on an SDP, such as SDP 201 in Figure 2. As the reader will appreciate, the two major telecommunications network types include the public switched telephone network (PSTN) and the Internet, both shown in Figure 1. The PSTN is a circuit switched network carrying signals from point to point, e.g., source node of the calling party to the destination node of the called party, in a synchronous circuit path of interconnected local exchanges are switches using a dedicated channel of fixed bandwidth. The Internet is a worldwide interconnection of internet protocol (IP) networks, with interconnecting computers communicating with each other using transmission control protocol/Inernet protocol (TCP/IP). On an IP network, data from a source node, e.g., sending computer, is cast into a number of packets that may individually be transported via multiple paths on the network to be reassembled at a destination node. The Internet is thus a packet switched network carrying signals from point to point, e.g., computer to computer, in an asynchronous fashion.

The Internet was designed to carry, data but has increasingly been used to transport voice and multimedia information. On an IP network voice or multimedia information can be digitized as data and transported over the network using the IP, also referred to as voice over IP (VoIP). The session initiation protocol (SIP), promulgated by the internet engineering task force (IETF), is intended to achieve interoperability for VoIP among different networks. The SIP standard provides a specification for communication of multimedia such as voice, data and video between terminal equipment, e.g., PCs with telephony capabilities, VoIP phones, as well as mobile wireless multifunction devices communicating over a GPRS network that can connect to the Internet. With the introduction of digital networks, the exchanges and switches of the PSTN have been upgraded to handle digital, time division multiplexed trunk traffic between the exchanges. External digital communication systems can communicate with the PSTN through a digital interface at the exchange such as a primary rate interface (PRI) which is part of the integrated services digital network (ISDN). Web applications and their associated web pages were originally written in hypertext markup language (HTML) and can be hosted on the IP network on web servers. Web pages can be called up by their URI, which is an IP address on the Internet. XML is used to extend HTML with enhanced features including customizable tags that allow for more structural specification of data than available with HTML. ccXML involves creating telephony applications in XML scripts that include XML tags indicating how a telephone call is to be processed. For example, XML scripts associated with a particular called number can be provided in a database 306 on the SDP 301.

As noted above, in an ISDN, TCP/IP is used as the protocol to transmit information. In the PSTN (SS7 network), an ISDN user part (ISUP) is used to connect and disconnect calls. Telephony or computer telephony integration (CTI) involves using a computer to control and manage a phone or telephone system. That is, IP telephony pertains to the two-way transmission of voice over a packet-switched IP network, which is part of the TCP/IP protocol suite. Telephony, as used herein, includes realtime applications over IP, including voice over instant messaging (IM) and videoconferencing. When CTI is applied to a PSTN or IP telephony network system it is implemented with a computer telephony server. The SDP described herein can include an application server capable of acting as a computer telephony server. Such a server in the SDP, e.g., 201 in Figure 2, executes telephony applications that can provide custom operator services such as interactive voice response, IM, PTT, etc.

ccXML applications are provided to and operable on by a server 300 in the SDP in order to provide for call control methods described in XML documents. Figure 3 illustrates an embodiment of an application server 300 capable of operating on ccXML applications. The ccXML applications are written by a program developer and made accessible by the application server 300 to handle and execute the above mentioned various operator services. For example, the ccXML applications are written to coordinate events, e.g., call start, call transfer, call end, etc., in a telephony based system.

Figure 3 illustrates an exemplary application server which is capable of handling ccXML applications with features and functionality extended to web services and which are able to coordinate telephony and web services according to various embodiments. Figure 3 illustrates that the application server 300 is capable of accepting incoming and outgoing signaling through a network IP layer on a server using TCP/IP protocol. The IP layer provides the communication protocol for connecting one application with another application. The transport layer uses the TCP and/or universal datagram protocol (UDP) for transport this signaling to appropriate computer telephony (CT) software modules. The application server 300 is responsible for accepting incoming calls, retrieving telephony applications, including ccXML applications associated with a call, and executing the XML scripts of the telephony application. Each incoming call is treated as a separate session and the application server 300 is responsible for processing all user events and system actions that occur in multiple simultaneous sessions. The application server 300 is also responsible for all call routing in all sessions.

Embodiments of the disclosure can be performed by software and/or firmware (i.e., computer executable instructions), hardware, application modules, and the like, executable and/or resident on the application server 300. The embodiment are not limited to any particular operating environment or to instructions written in a particular programming language. The CT modules can include a set of software modules running on a Windows NT or Unix server. Embodiments, however, are not limited to these examples. For example, the application server 300 can be implemented as a Unix machine on a card, and multiple cards can be installed on a caged backplane to form a highly scalable system.

The application server 300 illustrates four software modules listed as a session manager 310, an I/O abstraction layer 320, a computer telephony (CT) abstraction layer 330, and a telephony scripting language parser 340. The telephony scripting language parser 340 is further illustrated including a ccXML parser 342 and a generic XML parser 344. In addition, a streaming interface 350 provides a direct streaming path for media data between the I/O abstraction layer 320 and the CT abstraction layer 330. Each of these modules is designed to be a separate dynamically linked library (DLL) and perform a particular task.

The session manager 310 is responsible for creating new sessions, deleting terminated sessions, routing all actions and events to the appropriate modules and maintaining modularity between each session. The session manager 310 responds to I/O and ccXML goto requests, and other additional events as the same will be appreciated by one of ordinary skill in the art. The session manager 310 interfaces to the external network of the application server 300 via the I/O abstraction layer 320, a library (LIB) 395, and the CT abstraction layer 330. It accesses the I/O and CT layers as a set of classes and member functions that are individual DLLs, as the same is understood in object oriented programming. The session manager 310 can run as a single-threaded processor of actions and events.

As illustrated in Figure 3, the modules of the application server 300 communicate with one another. The session manager 310 communicates to both the I/O abstraction layer 320 and the CT abstraction layer 330 through traditional DLL entry points with C/C++ parameter passing. The I/O abstraction layer 320 and the CT abstraction layer 330 communicate through the streaming interface 350. The session manager 310 and the telephony scripting language parser 342 communicate through DLL entry points. By way of example, and not by way of limitation, the session manager 310 and the telephony scripting language parser can communicate through DLL entry points using microXML. In this example, the session manager 310 behaves like a virtual machine with its own set of "OpCodes", as the same will be understood in operating system parlance. MicroXML is the parsed ccXML scripts interpreted into the OpCodes.

In operation, a telephony session begins with the reception of an asynchronous event from the CT abstraction module 330 which signals an incoming call. The session manager 310 then creates a session for this call by accessing a database (e.g. context repository 282 of Figure 2), keyed on the ' session's domain name system (DNS) and automatic number identification (ANI) information, which returns an initial ccXML script. The DNS is the name resolution system that lets users locate computers on a Unix network or the Internet (TCP/IP network) by domain name and the ANI is a telephone service that transmits the billing number (BN) and the telephone number of the incoming call.

The telephony scripting language parser 340 is a separate DLL invoked through short microXML event scripts. It returns a microXML action script. A cycle of actions and events begins with the transmission of this script to the telephony scripting language parser 340 for processing. The telephony scripting language parser 340 responds to this event by returning a ccXML script of its own containing I/O and CT action requests collected from the parsing of the script. The session manager 310 now processes these action requests and then returns to parsing until the end of the session.

Each session is assigned a unique session identification (ID). The session manager 310 is accessed or invoked via a number of interface points of its DLL, as the same will be appreciated by one of ordinary skill in the art. The I/O abstraction layer 320 performs input and output operations for the application server 300. The I/O abstraction layer 320 renders transparent to the internal of the application server 300 the variety of I/O formats and protocols that might be encountered externally to the server. The I/O abstraction layer 320 is accessed or invoked via a number of interface points of its DLL.

The CT abstraction layer 330 is an abstraction layer that makes it possible for the application server 300 to communicate with several computer telephony devices and/or protocols. In one direction, the CT abstraction layer 330 receives requests for computer telephony actions from the session manager 310 and translates those requests to a CT module. In the other direction, the CT abstraction layer 330 receives user events directed to that CT module and relates them back to the session manager 310. In the embodiment of Figure 3, the illustrated CT modules include a H.232 stack for handling VoIP signals, a session initiation protocol (SIP), a media gateway control protocol (MGCP), and other CT modules, etc., as the same will be appreciated by one of ordinary skill in the art. Since several CT modules can be placed below the CT abstraction layer 330 and the CT abstraction layer 330 will talk to the CT modules, the modular design allows the application server 300 to communicate with a new computer telephony device or protocol with the addition of a new CT module.

The CT abstraction layer 330 is instantiated (i.e., in object technology, the creation of an object of a specific class) by the session manager 310. In operation, the session manager 310, XML parser 340, and CT abstraction layer 330 can cooperate via the following protocol. First, the telephony scripting language parser 340 locates a ccXML element which is associated with a telephony task. Next, the telephony scripting language parser sends this task to the session manager 310 in a microXML action string. The session manager 310 then parses the microXML action string and determines the appropriate call to the CT abstraction layer 330 along with its associated parameters. The session manager 310 now calls the CT abstraction layer 330 asynchronously and the CT abstraction layer 330 returns an event signaling the completion of the CT task and the session manager 310 resumes parsing. The CT abstraction layer 330 is accessed or invoked via a number of interface points of its DLL.

The streaming interface 350 provides a direct streaming transfer between the I/O abstraction layer 320 and the CT abstraction layer 330 when media data, such as audio or other multimedia, is involved. For example, the streaming interface facilitates the application server 300 to play audio from URIs and to record audio to URIs in a streaming manner.

The telephony scripting language parser 340 is responsible for parsing the ccXML scripts handed to it by the session manger 310. It in turn informs the session manager 310 of the described actions coded in the ccXML scripts. The generic XML parser 344 parses the ccXML scripts, which include XML scripts with embedded custom tags to extend the features and functionality of ccXML to web services and to coordinate telephony and web services, and puts them in a format that the ccXML parser 342 can expediently act on. The generic XML parser 344 employs components which enable parsing of ccXML documents into an object model, e.g., document object model (DOM) listing the parsed objects in a hierarchical tree structure.

The ccXML parser 342 maintains state per session so that each invocation of the ccXML parser 342 will continue where the previous invocation within the same session ended. The maintenance of state includes preserving the DOM for the current instance of ccXML, the node in the DOM that the parser is currently examining, and any variables that are associated with the session. The ccXML parser 342 is accessed or invoked via a number of interface points of its DLL.

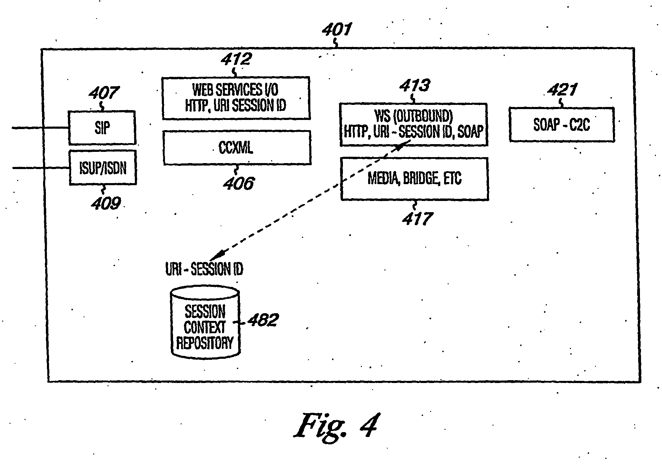

According to various embodiments, the ccXML applications include the addition of embedded custom tags to extend the features and functionality of ccXML to web services and to coordinate telephony and web services applications. Upon reading this disclosure, one of ordinary skill in the art will appreciate the manner in which a program developer could write a number of ccXML tags to extend the features and functionality of ccXML to web services (exposed on the application server 300) and to coordinate telephony and web services thereon. The features and functionality of ccXML are extended to web services by using the session ID and event handling mechanisms of ccXML. The extended features and functionality of ccXML can be provided by customized tags which recognize a request for web services and can execute to retrieve an appropriate resource. By way of example and not by way of limitation, the ccXML application can execute to connect with a resource such as a service controller in an application server in the SDP in order to access and retrieve a requested web service. Example web services can include location services, conferencing services, short message service (SMS), email messaging services, etc. By extending the features and functionality of ccXML to such web services (and using a session ID for accessing session context as described more next in Figure 4), the embodiments of the present disclosure coordinate telephony and web services, in a standards based way, between the telephony and web services environment.

### ccXML Extension Embodiment

Figure 4 illustrates an embodiment of the methodology for extending the functionality of ccXML's role in the SDP 401 to processing web service events and input/output (I/O). As described in Figure 3 above, ccXML provides call control methods described in XML that provide telephony systems the ability to use XML to control time division multiplexing (TDM) or session initiation protocol (SIP) channels to perform the above mentioned telephony events, actions, or tasks, e.g., call start, call transfer, call end. ccXML also employs the concept of a session ID to coordinate these actions in the telephony environment.

IP telephony involves one protocol for transport and another for signaling. As illustrated in Figure 3, transport is provided by UDP over IP for voice packets and either UDP or TCP over IP for signals. IP telephony signaling protocol refers to the commands used to establish and terminate a phone call over an IP network. The IP telephony signaling protocol supports such features as conference calling, call waiting, call transfer, etc. Example IP telephony signaling protocols are H.323, SIP and media gateway control protocol (MGCP). Signaling system 7 (SS7) is the protocol used in the PSTN for setting up calls and providing services. Within the SS7 protocol stack, the ISDN user part (ISUP) is used to connect and disconnect a call.

The embodiment of Figure 4 illustrates signaling being received to the SDP 401 according to SIP protocols 407 and according to ISUP/ISDN protocols 409. According embodiments of the disclosure, the signaling is received and handled by a set of ccXML applications 406 in the SDP. These ccXML applications include the work of a program developer to write a number of ccXML tags to extend the features and functionality of ccXML on the application server 400 to web services. Web applications and services are written in web services definition language (WSDL) which is also an XML based language. Hypertext markup language (HTML) is a subset of XML and accordingly the web applications can be handled according to hypertext transfer protocol (HTTP). Each web application and service can be called up by its URI, which is its IP address. The same has been illustrated in the UDDI registry 258 of Figure 2. That is, the UDDI registry is shown containing location and access mechanisms (URI-WSDLs) for various web services.

The embodiment of Figure 4 illustrates the ccXML applications 406 embodiments interfacing to web services as an event and I/O processor 412 to handle the HTTP, URI, and session IDs. Additionally, Figure 4 illustrates the ccXML applications 406 executing to invoke web services (WS outbound) 413 based on customized tags. The UDDI, e.g., 258 in Figure 2, interacts with the web services using web services definition language (WSOL) and simple object access protocol (SOAP).

In various embodiments, the application server 400 includes program instructions which can execute as agents to initiate server side applications, e.g, the ccXML applications with their features and functionality extended to web services using a session ID and the event handling mechanisms of ccXML. SOAP can be used to provide access to particular web services, e.g., click to connect (C2C) service 421, provide media and bridge connections 417, etc., in response to a particular executing ccXML application 406. Further, as illustrated in the embodiment, such program instruction agents can execute instructions to store the associated session ID in a context repository 482. One example for suitable program instruction agents is described in the copending patent application "Service Chaining".

Thus, a web service application or service requested can have its URI, and other web session information, associated with an existing session ID in the context repository and effectively add information to an existing session context. As described in "Service Chaining", the program instruction agents on the application server 400 act as user endpoints, e.g., called partys, and initiate a service or service chain. For example, in some embodiments of the "Service Chaining" application, BOTS are used which act as end point clients (e.g., user endpoints) in a PTT or IM telephony session to extract parameters which can subsequently be used by a next application in the chain. These parameters can include session participants, presence details, phone numbers, etc. By acting as clients to the PTT or IM telephony session environment, the existing telephony applications to mobile devices do not require modification. The BOT extracts information about a telephony session and then can use the session context from the context repository 482 to invoke another application. Examples of using a session context to invoke another application are described in the copending patent application "Service Chaining".

According to various embodiments, the extended features and functionality of ccXML can include location services, conferencing services, short message service (SMS), email messaging services, etc. By expending the features and functionality of ccXML to such web services, and using a session ID for accessing session context, the embodiments of the present disclosure can coordinate telephony and web services between the telephony and web services environment.

### Embodiments Employing Session Context Based on Session ID

Figure 5 illustrates an embodiment employing session context based on a session ID to coordinate telephony and web services. Figure 5 illustrates that an application client 505, e.g., a flash type SDP client, can be written by a program developer and provided to a mobile device such as shown in Figure 2 - (e.g., application client 205 on mobile device 202). The above mentioned copending "Service Chaining" patent application provides and example of the manner in which a program developer can embed in a mobile application client the ability to be associated with a session ID in conjunction with a number and type of web services which are implemented and made available through the SDP.

As described in connection with Figure 2, a user of a wireless device can execute telephony applications, e.g., IM, PTT, etc, which are available as provided by their network operator. According embodiments of the disclosure, a mobile application, e.g., SDP client 505, can also be provided to the wireless device and stored thereon as an executable flash application. A user can launch the SDP client 505 on their wireless device concurrently with executing a telephony application, e.g., a PTT telephony session. The SDP client 505 can execute instructions to connect to a program instruction agent, e.g., BOT, on the SDP 501 as if the program instruction agent was a user endpoint in the telephony session. As described herein, the program instructions can then execute to initiate a server side application, e.g., a ccXML application, on the SDP 501 to access web services and coordinate those web services with the telephony session.

The embodiment of Figure 5 illustrates an example embodiment for the methodology which can be used to coordinate the session context between the telephony session and various web service applications, 540-1, 540-2, ..., 540-Y based on a session ID. The designator "Y" is intended to represent that a number of web services may be exposed through the SDP 501 and used by the program developer in creating a particular SDP client 505 for the device. The web services examples illustrated here include a click to connect (C2C) web service, a group service, a "near me" location service, etc. The embodiments, however, are not limited to these examples.

As shown in the example embodiment of Figure 5, a ccXML application has invoked a group web service 540-2 via the SDP 501 to retrieve group names from a GLMS 584. As described above, the URI-WSDL (e.g., location and access) information for this web service can be obtained through a UDDI API call to a UDDI in the SDP 501 and actual access to the group web service can be provided through the WSDL and SOAP. In this example, group names retrieved from the GLMS 584 are provide to the SDP client 505 and can be presented to a display of the wireless device. The program instructions executing on an application server of the SDP 501 can execute to retrieve group names from a GLMS database 584 using an interface such as Java database connectivity (JDBC) which is a programming interface that lets Java applications access a database via the SQL language: In the embodiment of Figure 5, the program instructions execute to provide a session pointer to the URI of the group web service back to the SDP client 505.

In connection with this group service, program instructions on the SDP 501 execute to associate and store information associated with the group web service, e.g., parameters such as names, URI, etc., to a session context associated with a session ID in the context repository 582. For example, the program instructions can execute to store information associated in with the group web service to a particular session context in the context repository using an interface such as JDBC. As illustrated in this example embodiment the program instructions can also execute to provide a session pointer to the URI of the group web service in order to extract parameter information therefrom.

A user could then select from among various groups and/or particular groups names provided to the SDP 505. The SDP client 505 application on the wireless device can execute to present a user of the SDP client 505 with a number of other available web services via icons on the display such as the C2C icon illustrated in Figure 5. Upon actuating this icon, the SDP client 505 can execute instructions to once again connect to a program instruction agent, e.g., BOT, on the SDP 501 as if the program instruction agent was a user endpoint in the PTT telephony session. For example, the SDP client 505 can execute instructions to connect to the SDP 501 using global system for mobile. general packet radio service (GSM GPRS) which is an enhancement to the GSM mobile communications system that supports data packets. Embodiments, however, are not limited to this example and access could be provided through evolution data out (EVDO), 1xRTT (the first version of CDMA2000), WiFi, or other data transport mechanisms. In the example illustrated in the embodiment of Figure 5, the BOT can execute instructions to access an appropriate ccXML application on the SDP 501 which can then execute to retrieve session context from the context repository 582 based on the session ID. The ccXML application can then execute instructions to provide this session context as an input for initiating a C2C web service 540-1. The ccXML can execute to retrieve session context based on the session ID from the context repository 582 using JDBC.

As described above, the URI-WSDL (e.g., location and access) information for this web service can be obtained through a UDDI API call to a UDDI in the SDP 501 and actual access to the C2C web service 540-1 can be provided through the WSDL and SOAP. In this example, phone calls are started and can be handled through a ccXML application. Program instructions executing on an application server of the SDP 501 can execute to provide a session pointer to the URI of the C2C web service back to the context repository 582 in order to add information to the session context based on the appropriate session ID.

In connection with this C2C web service, program instructions on the SDP 501 can execute to associate and store information associated with the C2C web service, e.g., call participants, call status, URIs, etc., to the session context associated with the session ID in the context repository 582. In this manner, the program instructions can continue to store information associated with the C2C web service, and/or other web services invoked through this methodology, to the session context in the context repository 582 based on the session ID. Hence, embodiments disclosed herein describe providing ccXML applications, having functionality extended to web services, to a SDP. These extended functionality ccXML applications are used to form a session ID and to store session context in a context repository based on the session ID. The session ID can then be used to coordinate session context between the telephony and web services domains.

Although specific embodiments have been illustrated and described herein, those of ordinary skill in the art will appreciate that an arrangement calculated to achieve the same techniques can be substituted for the specific embodiments shown. This disclosure is intended to cover adaptations or variations of various embodiments of the invention. It is to be understood that the above description has been made in an illustrative fashion, and not a restrictive one. Combination of the above embodiments, and other embodiments not specifically described herein will be apparent to those of skill in the art upon reviewing the above description. The scope of the various embodiments of the invention includes other applications in which the above structures and methods are used. Therefore, the scope of various embodiments of the invention should be determined with reference to the appended claims, along with the full range of equivalents to which such claims are entitled.

In the foregoing. Detailed Description, various features are grouped together in a single embodiment for the purpose of streamlining the disclosure. This method of disclosure is not to be interpreted as reflecting an intention that the embodiments of the invention require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A method for coordinating telephony and web services, comprising:
defining a call control XM L, ccXMI, element associated with accessing a web service application (206; 300; 406);
extracting a session identification, ID, from a ccXML action in a telephony session (412) wherein on the basis of the session ID session context is stored in and retrieved from a context repository 482; and
invoking the web service application;
associating the invoked web service application with the session ID; and
adding information associated with the invoked web service application to a session context associated with the session ID in the session repository to coordinate events and context between the telephony session and the web service application (413).

2. The method of claim 1, wherein the method includes using event handling mechanism (300) available in ccXML for the telephony session to control, time division multiplexing, TDM, and session initiation protocol, SIP, channels (300) to perform tasks selected from the group of:
a call answer,
a call transfer;
a call start;
a conference bridge; and
a call end.

3. The method of claim 1, wherein the method includes associating a session con-text for the telephony session with the session ID and storing the session context based on the session ID in the context repository (582).

4. The method of claim 3, wherein the session context includes participants to the telephony session (Figure 5).

5. The method of claim 4, wherein the method includes using the session context as an input to invoke a first web service application 421/(Figure 5).

6. The method of claim 5, wherein invoking the first web service application using the session context includes:
storing additional information associated with the first web service application to the session context in the context repository based on the session ID;
retrieving the session context.based on the session ID to invoke a second web service application;
storing additional information associated with the second web service application to the session context in the context repository based on the session ID; and
using the session ID to coordinate events and context between the telephony session, the first web service application, and the second web service application (Figure 5).

7. The method of claim 6, wherein the method includes invoking a first and a second web services applications, including invoking web service applications selected from the group of:
a group list (Figure 5); and
a location service (Figure 5).

8. The method of claim 7, wherein the method includes using the session ID to coordinate events and context between the telephony session, the first web service, and the second web service includes coordinating a location service with a push to talk, PTT, telephony session (Figure 5).

9. The method of claim 8, wherein using the session ID to coordinate events and 5 context between the telephony session, the first web service, and the second web service includes coordinating a web conference with an instant messaging, IM; telephony session (Figure 5).

10. A server comprising means adapted to implement a method as claimed in any preceding claim.

11. A computer program comprising instructions arranged, when executed, to implement a method as claimed in any of claims 1 to 9.

## Patentansprüche

1. Verfahren zum Koordinieren von Telefonie und Webservices, wobei das Verfahren folgendes umfasst:
das Definieren eines Verbindungssteuerungselements, XML, ccXML, das dem Zugriff auf eine Webserviceanwendung zugeordnet ist;
das Extrahieren einer Sitzungsidentifikationsnummer, ID, aus einer ccXML-Aktion in einer Telefoniesitzung (412), wobei auf der Basis der Sitzungs-ID Sitzungskontext in einem Kontextspeicher (482) gespeichert und aus diesem abgerufen wird; und
das Aufrufen der Webserviceanwendung;
das Zuordnen der aufgerufenen Webserviceanwendung zu der Sitzungs-ID; und
das Hinzufügen von der aufgerufenen Webserviceanwendung zugeordneten Informationen zu einem Sitzungskontext, der der Sitzungs-ID in dem Sitzungsspeicher zugeordnet ist, um Ereignisse und Kontext zwischen der Telefoniesitzung und der Webserviceanwendung (413) zu koordinieren.

2. Verfahren nach Anspruch 1, wobei das Verfahren den Einsatz eines in ccXML verfügbaren Ereignisbehandlungsmechanismus (300) für die Telefoniesitzung zur Steuerung des Zeitmultiplexings, TDM, aufweist und Session Initiating Protocol-Kanäle, SIP-Kanäle (300), zur Ausführung von Aufgaben, die aus der folgenden Gruppe ausgewählt werden:
eine Verbindungsannahme;
eine Verbindungsumlegung;
einen Verbindungsaufbau;
eine Konferenzbrücke; und
eine Verbindungsbeendigung.

3. Verfahren nach Anspruch 1, wobei das Verfahren das Zuordnen eines Sitzungskontexts für die Telefoniesitzung mit der Sitzungs-ID aufweist, sowie das Speichern des Sitzungskontexts auf der Basis der Sitzungs-ID in dem Kontextspeicher (582).

4. Verfahren nach Anspruch 3, wobei der Sitzungskontext Teilnehmer an der Telefoniesitzung (Figur 5) aufweist.

5. Verfahren nach Anspruch 4, wobei das Verfahren das Verwenden des Sitzungskontexts als eine Eingabe zum Aufrufen einer ersten Webserviceanwendung 421 (Figur 5) aufweist.

6. Verfahren nach Anspruch 5, wobei das Aufrufen der ersten Webserviceanwendung unter Verwendung des Sitzungskontexts folgendes aufweist:
das Speichern zusätzlicher Informationen, die der ersten Webserviceanwendung zugeordnet sind, zu dem Sitzungskontext in dem Kontextspeicher auf der Basis der Sitzungs-ID;
das Abrufen des Sitzungskontexts auf der Basis der Sitzungs-ID zum Aufrufen einer zweiten Webserviceanwendung;
das Speichern zusätzlicher Informationen, die der zweiten Webserviceanwendung zugeordnet sind, zu dem Sitzungskontext in dem Kontextspeicher auf der Basis der Sitzungs-ID; und
das Einsetzen der Sitzungs-ID zum Koordinieren von Ereignissen und Kontext zwischen der Telefoniesitzung, der ersten Webserviceanwendung und der zweiten Webserviceanwendung (Figur 5).

7. Verfahren nach Anspruch 6, wobei das Verfahren das Aufrufen einer ersten und einer zweiten Webserviceanwendung aufweist, wobei dies das Aufrufen von Webserviceanwendungen aufweist, die aus der folgenden Gruppe ausgewählt werden:
eine Gruppenliste (Figur 5); und
ein Positionsdienst (Figur 5).

8. Verfahren nach Anspruch 7, wobei das Verfahren das Einsetzen der Sitzungs-ID zum Koordinieren von Ereignissen und Kontext zwischen der Telefoniesitzung, dem ersten Webservice und dem zweiten Webservice aufweist, einschließlich der Koordination eines Positionsdienstes mit einer Push-to-Talk, PTT, Telefoniesitzung (Figur 5).

9. Verfahren nach Anspruch 8, wobei das Einsetzen der Sitzungs-ID zum Koordinieren von Ereignissen und Kontext zwischen einer Telefoniesitzung, dem ersten Webservice und dem zweiten Webservice das Koordinieren einer Webkonferenz mit einer Instant Messaging, IM, Telefoniesitzung (Figur 5) aufweist.

10. Server, das eine Einrichtung umfasst, die in der Lage ist, ein Verfahren nach einem der vorstehenden Ansprüche zu implementieren.

11. Computerprogramm, das Befehle umfasst, die so angeordnet sind, dass sie, wenn sie ausgeführt werden, ein Verfahren nach einem der Ansprüche 1 bis 9 implementieren.

## Revendications

1. Procédé pour coordonner la téléphonie et des services Web, comprenant les étapes consistant à :
définir un élément XML de contrôle d'appel, ccXML, associé à l'accès à une application de services Web (206 ; 300 ; 406) ;
extraire une identification de session, ID, d'une action ccXML dans une session de téléphonie (412) dans lequel sur la base de l'ID de session, le contexte de session est stocké dans et récupéré d'un référentiel de contexte (482) ; et
appeler l'application de services Web ;
associer l'application de services Web appelée à l'ID de session ; et
ajouter les informations associées à l'application de services Web appelée à un contexte de session associé à l'ID de session dans le référentiel de session pour coordonner des événements et un contexte entre la session de téléphonie et l'application de services Web (413).

2. Procédé selon la revendication 1, comprenant les étapes consistant à utiliser un mécanisme de gestion d'événements (300) disponible en ccXML pour que la session de téléphonie contrôle des canaux (300) de multiplexage par répartition dans le temps (en anglais « time division multiplexing », TDM) et de protocole d'initiation de session (en anglais « session initiation protocol », SIP) pour effectuer des tâches choisies dans le groupe constitué :
d'une réponse à un appel,
d'un transfert d'appel ;
d'un début d'appel ;
d'un pont de téléconférence ; et
d'une fin d'appel.

3. Procédé selon la revendication 1, comprenant les étapes consistant à associer un contexte de session pour la session de téléphonie à l'ID de session et à stocker le contexte de session basé sur l'ID de session dans le référentiel de contexte (582).

4. Procédé selon la revendication 3, dans lequel le contexte de session comprend des participants à la session de téléphonie (figure 5).

5. Procédé selon la revendication 4, comprenant 'étape consistant à utiliser le contexte de session comme entrée pour appeler une première application de services Web (421) (figure 5).

6. Procédé selon la revendication 5, dans lequel l'appel de la première application de services Web en utilisant le contexte de session comprend les étapes consistant à :
stocker des identifications supplémentaires associées à la première application de services Web au contexte de session dans le référentiel de contexte basé sur l'ID de session ;
récupérer le contexte de session basé sur l'ID de session pour appeler une seconde application de services Web ;
stocker des informations supplémentaires associées à la seconde application de services Web au contexte de session dans le référentiel de contexte basé sur l'ID de session ; et
utiliser l'ID de session pour coordonner des événements et un contexte entre la session de téléphonie, la première application de services Web, et la seconde application de services Web (figure 5).

7. Procédé selon la revendication 6, comprenant l'étape consistant à appeler une première et une seconde applications de services Web, y compris appeler les applications de services Web choisies dans le groupe constitué :
d'une liste de groupes (figure 5) ; et
d'un service de localisation (figure 5).

8. Procédé selon la revendication 7, dans lequel l'utilisation de l'ID de session pour coordonner des événements et un contexte entre la session de téléphonie, le premier service Web, et le second service Web comprend l'étape consistant à coordonner un service de localisation avec une session de téléphonie « main sur le bouton » (en anglais « push to talk », PTT) (figure 5).

9. Procédé selon la revendication 8, dans lequel l'utilisation de l'ID de session pour coordonner des événements et le contexte entre la session de téléphonie, le premier service Web, et le second service Web comprend l'étape consistant à coordonner une conférence Web avec une session de téléphonie en messagerie instantanée (en anglais « instant messaging ») (figure 5).

10. Serveur comprenant des moyens adaptés pour mettre en oeuvre un procédé selon l'une quelconque des revendications précédentes.

11. Programme informatique comprenant des instructions prévues, lorsqu'elles exécutées, pour mettre en oeuvre un procédé selon l'une quelconque des revendications 1 à 9.
